# EUROPEAN PATENT SPECIFICATION

(11) **EP 2 243 357 B1**
(45) Date of publication and mention of the grant of the patent: **20.06.2012**
(21) Application number: 10004219.1
(22) Date of filing: 21.04.2010
(51) Int. Cl.: A01K 79/02

(54) **A device for use with electrofishing, a module for use in the device and method for electrofishing**
Vorrichtung zur Verwendung zum elektrifizierten Fischfang, Modul zur Verwendung mit der Vorrichtung und Verfahren zum elektrifizierten Fischfang
Dispositif pour la pêche à l'électricité, module destiné à être utilisé avec ce dispositif et méthode de pêche à l'électricité

(30) Priority: 23.04.2009 NL 1036896
(43) Date of publication of application: 27.10.2010
(73) Proprietor: H. F. K. Holding B.V., 3741 LM Baarn (NL)
(72) Inventor: Klein Woolthuis, Harmen, 3741 LM Baarn (NL)
(74) Representative: Plaggenborg, Menko Bernard

(56) References cited:
- DE-A1- 2 530 986
- DE-A1- 3 229 173
- US-A- 3 415 001
- US-A- 4 038 560

## Description

The present invention relates to an apparatus for use with electrofishing, comprising an electrode which is made of an electrical conductor partially covered with an insulator, wherein the electrical conductor distributed along its length is at at least one position free of insulator, the device being in the form of an assembly of separate modules in which each module is provided with:
- an electrical connection for providing electrical power supply to the module, according to the preamble of independent claim 1.

Furthermore the invention relates to a module for use in such a device, to the use of any such module and to a method for electrofishing.

Fishing with electrical tools is known in the art. For instance, an electrofishing device is used wherein a trawl net is preceded by a number of electrodes each having multiple electrically conductive portions which are separated mutually by isolated parts of the electrodes. Every electrically conducting portion is electrically fed separately through which a pulse like current to the surrounding medium, in general seawater but also inland water or the like is possible, is delivered. A pulse generator, which is separately connected to each conductive portion of all electrodes and provides a pulse like control of the conductive portions, generates the pulses. The number of electrical supply lines from the generator to the electrically conductive portions is equally large as the number of electrically conductive portions of all electrodes and therefore gigantic. The pulse generator itself is built up in a very complicated way because of the large number of feeds it has to provide.

Such devices are for instance described in DE2530986, DE3229173, US3415001 and US4038560 which all comprise a single pulse generator that is arranged to control the separate electrodes in a pulsating way. According to those publications, for every electrode the pulse generator should have a separate electrical conduit with which it is connected separately to each electrode. In particular DE3229173 discloses a device in which modules can be recognised. These modules each contain an impulse transformer, which are fed with pulses generated aboard the ship. The device has a multitude of electrodes which are all actuated at the same time. DE2530986 discloses a device comprising a multitude of electrodes, wherein feeding the device with a pulse covers the whole seabed between the leftmost and rightmost electrode. In claim 6 of DE2530986, an embodiment of the device is disclosed capable of generating a moving field. This embodiment requires a multitude of electrodes belonging to (three) different groups, each group of the device being powered via one of three feed lines

Those known devices have the disadvantage that a large amount of connections has to be provided in order to be able to separately control each conductive portion, that is to say each electrode.

It is an object of the present invention to provide an improved device for use with electrofishing.

In order to achieve the aforementioned object the invention provides a device of the kind as mentioned in the preamble, that is characterized in that each module is provided with:
- a single electrode;
- a pulse generator connected to the electrical connection for powering the electrode in a pulsating way; and
- at least one coupling means for mutual coupling of modules, said coupling means comprising a connection with the electrode of an adjacent module.

As a result, the gigantic number of supply lines will also become redundant. Only one electrical conductor to the modules will suffice for powering the modules and the electrodes. Thereby the number of connections to be made will be less than in the case where a separate electrical connection is provided. Moreover, hereby the possibility is provided to have an adjacent electrode act as a counter pole when the electrode of a module is fed in a pulsating way.

Furthermore, the invention provides a module for use in a device according to claim 2, wherein it is provided with:
- a single electrode;
- an electrical connection for providing electrical power supply to the module;
- a pulse generator connected to the electrical connection for powering the electrode in a pulsating way; and
- at least one coupling means for mutual coupling of modules, said coupling means capable of providing a connection with the electrode of an adjacent module.

Providing such modules, of which the number to be employed is equal to the number of electrodes to be employed, has the advantage that when an electrode or other part becomes damaged, only that single module needs to be replaced. Hereby maintenance is much easier and more efficient than is the case with the usual methods.

It is furthermore preferred that the module comprises an enclosure which comprises the pulse generator, the at least one coupling means and the electrical connection, as well as an attachment for the electrode. The attachment is for instance conveniently a detachable or a fixed attachment. Thus, a unit is formed that can be handled easily, can be assembled in a simple way or, if necessary, can be replaced. The attachment may be a separate part that physically connects an electrode to the module but within the invention it is also understood that the electrode is principally formed as an integral part with the enclosure of the module, for instance is formed by means of injection molding or the like with the enclosure; in that case the electrode is attached to the module in a fixed way.

It is in particular preferred that the coupling means is equipped for a cooperating connection with a module collecting device. In that case, a module collecting device comprises a complementary connection means that provides a connection with an adjacent module.

In another embodiment the connection means of a module is equipped for (direct) cooperating connection with a coupling means of an adjacent module. Thereby a module collecting device can be made redundant and modules can be connected directly with each other. For instance, the modules can each comprise a segment of the substantially wing shaped profile that is known from European patent application EP 2.043.429 through which the modules connected with one another jointly form the profile in accordance with that publication. Also, within the scope of the invention, it is correspondingly possible that each module comprises a coupling means for cooperating connection of the electrical connections with an adjacent module and a separate fastener so as to connect adjacent modules physically with each other, such as bolt connections or similar screw connections or a wrap connection. Therefore a module according to the invention preferably comprises a fastener for a cooperating connection with a fastener of an adjacent module. The modules may for instance and preferably be detachably connected with each other.

According to the invention the module comprises a fastener for attachment to a module collecting device. A module collecting device may be constituted by a flexible device, such as a line, provided between two spacers, for instance between the doors of a trawl net. Such a module collecting device can also be constituted by a predominantly rigid device, such as known for instance from European patent application EP 2.043.429 filed in the name of HFK Engineering. A beam of a beam trawler may also serve as a module collecting device.

According to a further embodiment the module may have a shape that is adapted to the shape of the module collecting device. This is especially advantageous in the case of an attachment of the module to a device as is known from European patent application EP 2.043.429, as mentioned previously. Therewith a hydrodynamic embodiment can be obtained that provides little to no additional resistance.

In order to provide a slight hydraulic resistance during use of the module, it is preferred that the module has a shape that is adapted to the shape of the device.

In particular it is preferred that the module comprises a control circuit with at least one of: - a supply circuit for providing a pulse like feed to the electrode; and - a communication circuit for communication with an adjacent module, which is arranged for communicating a signal to the adjacent module after the electrode has been fed in a pulsating way. The circuit for providing the pulsating feed to the electrode is constituted by a pulse generator. This is fed by the electrical power supply and may principally have a construction that is equivalent to the known pulse generators.

According to another preferred embodiment the module comprises a communication circuit for communication with an adjacent module, which is arranged for at least one of: - receiving the signal of an adjacent module; - controlling the supply circuit for providing a pulse like feed to the electrode; and - having the electrode of an adjacent module act as a counter pole via a connection with that electrode. When in a first module the first pulse generator has delivered a pulse to the first electrode, that is to say when the pulse generator has fed the electrode in a pulsating way, the circuit of that first module will communicate a signal to an adjacent, second, module through which the (second) pulse generator of that particular second module will deliver a pulse to that particular second electrode. Subsequently, a circuit in that particular second module will again communicate a signal to an adjacent third module, and so further. This has the advantage that each module can be embodied identically. Each module is preferably provided with a control circuit having a circuit that identifies from which adjacent module a signal is received. This control circuit instructs the circuit for delivering a signal after the feeding in a pulsating way of the electrode of the particular module, so as to communicate a signal to the module at the other side of the particular module. Furthermore it is preferred that each module comprises a circuit that provides a connection with the electrode of an adjacent module, wherein that adjacent module acts as a counter pole when the electrode of the particular module is fed in a pulsating way. That provides a suitable pulse in the water between two adjacent electrodes.

Finally, the invention relates to a method of electrofishing using at least two modules according to claim 12, comprising the steps of: - electrically connecting the electrical connection of each module to a common electrical power supply; - mutually coupling the modules by means of the coupling means; and - powering the electrodes by means of the pulse generator provided in each module at different moments in time in a pulsating way. This provides a simple but effective method that allows for keeping the necessary control technical installation very simple.

The preferred embodiment of the method relates to the use of at least two modules according to this invention in an electrofishing device for fishing using a trawl net. With such a method the modules are pulled in front of the trawl net over the bottom of a water and electrodes of adjacent modules are electrically fed in a pulsating way at different moments in time. Therewith the advantage is obtained that two adjacent modules, or two modules positioned next to each other, will not simultaneously supply a pulse to the surrounding medium. Hence the pulsation occurs in an evenly distributed way whereby a greater effectivity is obtained than in the case of electrodes positioned next to each other delivering an electrical pulse simultaneously.

According to the invention it is particularly preferred that the electrodes extend in the trawl direction of the electrofishing device. Thus an excellent interaction with the bottom is obtained, where marine life to be catched, in particular though not exclusively fish, such as flatfish and shrimps, can predominantly be found. A positioning of the electrodes transverse to the direction of movement of the electrofishing device and of the net has the disadvantage as a matter of fact that obstacles on the sea bottom can easily destroy the device.

The present invention will now be illustrated by the drawing, in which:
fig. 1 shows a schematic perspective view of a first embodiment of a module according to the invention,
fig. 2 shows an application of the module according to fig. 1 in a module collecting device,
fig. 3 shows a schematic top view of a module according to the invention,
fig. 4 shows a schematic top view of a number of modules having coupling means according to the invention,
fig. 5 shows a schematic perspective view of the modules according to fig. 4, and
fig. 6 shows a side view of an application of a module according to the invention.

The figures show a preferred embodiment of the invention. The figures are not to be regarded as limitative for the scope of protection but only as a possible embodiment.

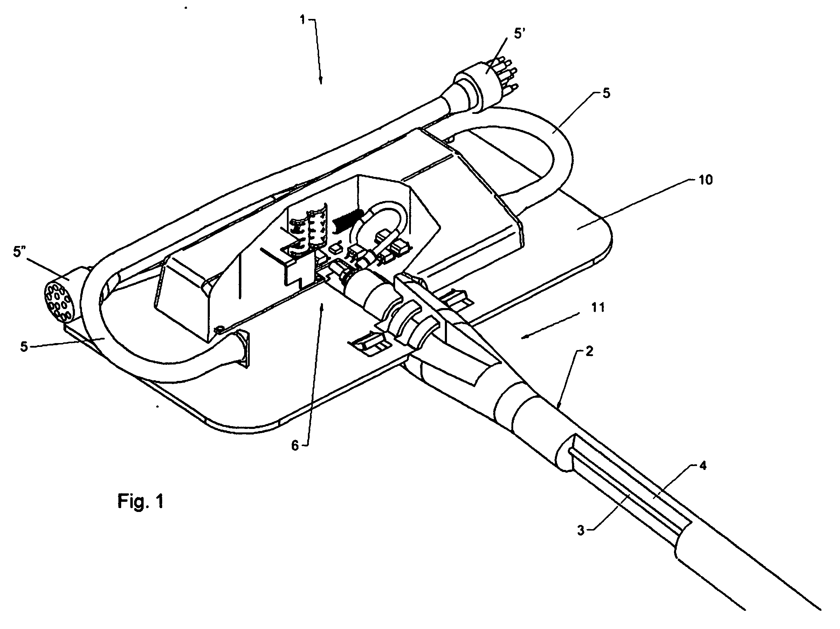

Fig. 1 shows a schematic perspective view of a module 1 according to the invention, which comprises a part of an enclosure 10 in which a connection 11 for attachment of the electrode 2 has been provided, as well as coupling means 5', 5" for cooperation with coupling means 5"; 5' of connecting means 5 of adjacent modules 1 for mutual coupling of those modules 1. Also in the enclosure 10 a generator 6 has been provided that provides for pulse like electrical power supply of an electrical conductor 3 in an electrode 2. With the term "generator" the electrical components for forming a pulse like electrical feed to the electrical conductor 3 are meant as known to a skilled person. In this specification this is also designated as "pulse generator". The electrical conductor 3 has been partially covered with an insulative material 4. Only a few places on the electrical conductor 3 have not been provided with insulative material 4. In particular it is preferred that the electrode 2 comprises at least two positions where the electrical conductor 3 is in contact with the surrounding fluid, more preferably at least three positions.

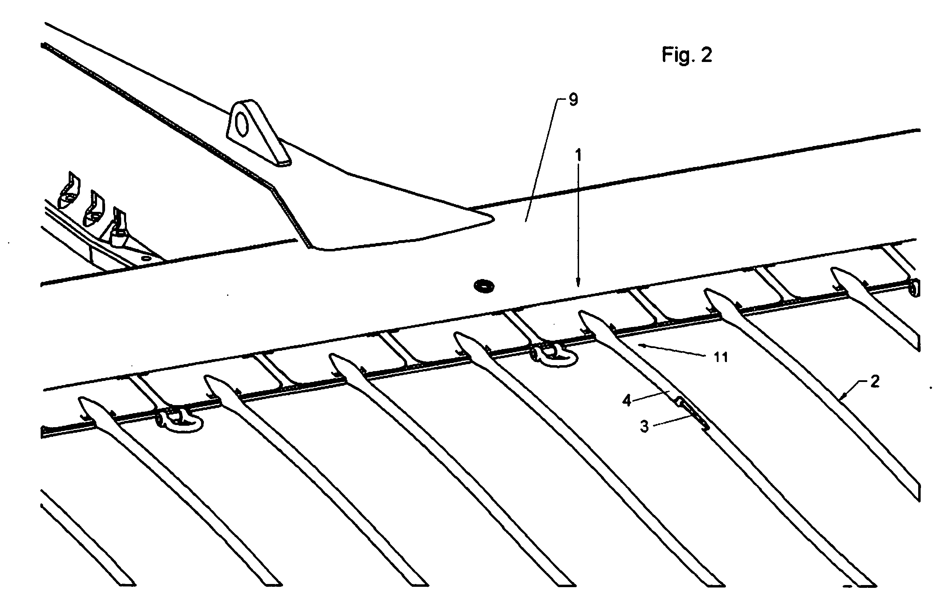

An application of the module 1 such as illustrated in fig. 1 is shown in fig. 2. Herein a multiple of modules 1 is incorporated in a module collecting device 9. The module collecting device 9 is a wing shaped device to which a trawl net (not illustrated) can be attached for movement across a sea bottom (not illustrated) or the like. The modules 1 are attached to the device 9 by means of fasteners (not illustrated), for instance screws, bolts or the like, in particular detachable.

The electrode 2 is attached to the enclosure 10 by means of a fastener, here with clamps 11 (illustrated once). It is however preferred that the construction of the electrode and the enclosure constitute an integral unit, that are attached to each other for instance by casting; the enclosure and the electrode may be manufactured out of various materials that are substantially connected inextricably with one another. Then notably an impervious connection between electrode and enclosure can be obtained.

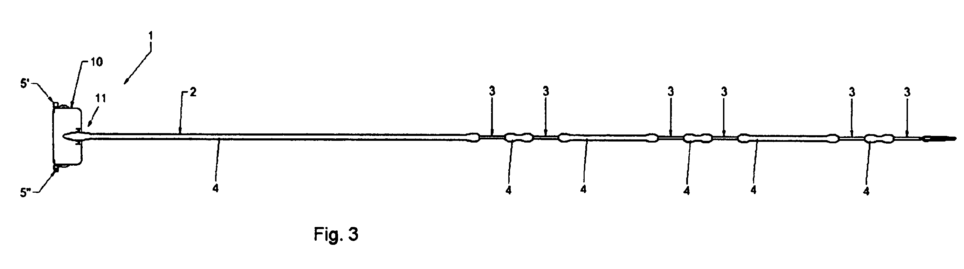

A schematic top view of the module 1 according to the invention is shown in fig. 3. The module 1 comprises an enclosure 10 with an electrode 2 attached thereto by means of a fastener 11. The electrode 2 is made of an electrical conductor 3 that has at least partially been provided with an insulative material 4. At some positions 3, separated by insulative material 4, the electrically conductive material has been linked to the surface of the electrode 2. For instance an insulative material 4 may be omitted from those positions or a separate conductive means may be applied.

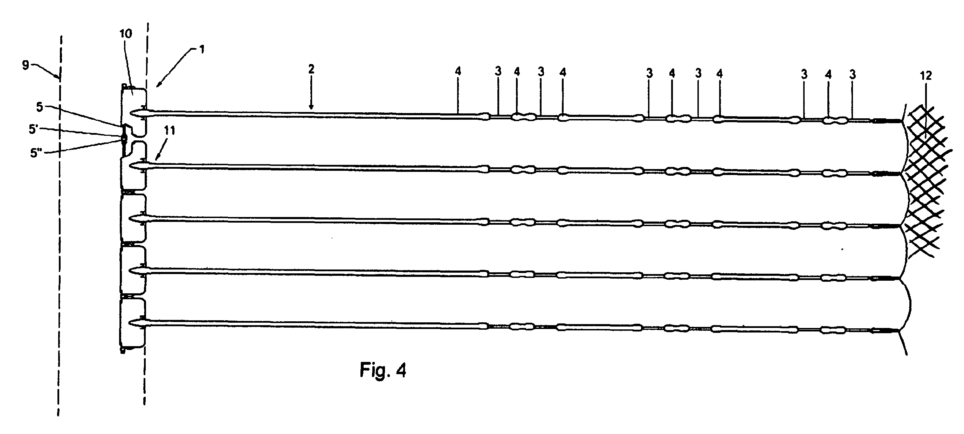

Fig. 3 furthermore shows coupling means 5', 5" to the enclosure 10, to which a connecting means 5 (not illustrated in fig. 3, but visible in fig. 1 and 4) can be connected.

In fig. 4 a multiplicity of adjacent and mutually connectable modules is illustrated, which connection may take place by means of the connecting means 5 that are to be connected to the coupling means 5', 5". During use the trawl net 12 will, seen in the trawl direction, be positioned behind the electrodes 2.

In the embodiment shown in fig. 4 five modules have been provided. The modules are mutually connected by means of the connecting means 5 to the coupling means 5', 5". The modules have communication means (not illustrated) that are in connection with for instance only the adjacent modules by means of the means 5. The connecting means 5 may comprise a plurality of wires and the coupling means 5', 5" may comprise a number of wires that corresponds with the number of poles, that are each connectable to a respective wire. A first wire may for instance comprise the power supply whereas a second wire serves for closing the circuit during pulsation. Especially, a particular module that provides a pulse like feed to the particular electrode, may have an electrical connection with the electrode of an adjacent module so that this adjacent electrode acts as a counter pole for the electrode that is fed in a pulsating way. Preferably these wires are all forwarded, as a result of which all modules are at all times connected to the electrical power supply.

The module 1 comprises a control circuit having a supply circuit to provide a pulse like power supply to the electrode 2. Furthermore, in the embodiment according to the drawing, module 1 comprises a communication circuit for communication with an adjacent module, which is arranged for communicating a signal to the adjacent module after the electrode 2 has been fed in a pulsating way. The circuit for providing a pulse like power supply (or pulse like feed) to the electrode 2 is constituted by the pulse generator 6. This is fed by the electrical power supply and can be substantially constructed equivalent to the pulse generators known in the technique.

Furthermore the module 1 comprises a communication circuit for communication with an adjacent module, which is arranged for receiving the signal of an adjacent module once that one has fed its particular electrode in a pulsating way. One embodiment furthermore provides that the communication circuit controls the supply circuit for providing a pulse like feed to its own electrode. Thereby, the communication circuit can, via a connection with the electrode of an adjacent module, have that adjacent electrode act as a counter pole of the electrode fed in a pulsating way. The electrode that acts as a counter pole therefore functions as a so-called ground electrode.

A module positioned at an end, such as illustrated in fig. 4, has a free communication means 5' or 5", to which for instance the electrical power supply can be connected. At least a third wire serves for communication between adjacent modules. For instance a provision can be made so as to not have a module communicate with an adjacent module but with one of the next modules. In such a case the possibility is provided to skip one or more modules as a result of which the signal, for letting the next module deliver a pulse, is not sent to the adjacent module but to a subsequent or still further module. Such is notably advantageous when a module or part therein is broken and for instance can not generate a pulse. Optionally, within the invention the possibility exists to not have each adjacent module successively feed a particular electrode in a pulsating way but each time the second or third in the sequence of modules that are positioned next to each other. In case more communication means are provided it is preferred that more wires are incorporated in the connecting means.

A first module, for instance a module that resides at a chosen end of the electrofishing device, will deliver a first pulse like power supply (or pulse like feed) to the connected electrode. Subsequently, the communication means of that module will send a signal to the adjacent module. For example the module that receives a signal can send a feedback signal to the module that sent the signal so as to confirm the receipt thereof. The receiving module will than deliver a pulse like feed to the particular electrode connected thereto. This sequence of pulse like feeds is repeated for each subsequent adjacent module until the last module has fed the particular electrode. Then the signal sent by that module will not be received by a following electrode, as a result of which this last module will not receive a feedback signal. The last module will then deliver a signal to the previous module from which the last received signal derives. Subsequently, a return of consecutive signals can take place in the reverse direction, until in a corresponding way the first module has been reached and that module has fed the particular electrode. Hereby a convenient pulse like feed of the electrodes is obtained, without two adjacent electrodes being fed simultaneously. Moreover, hereby a comprehensive regulatory system of a common pulse generator is becomes redundant.

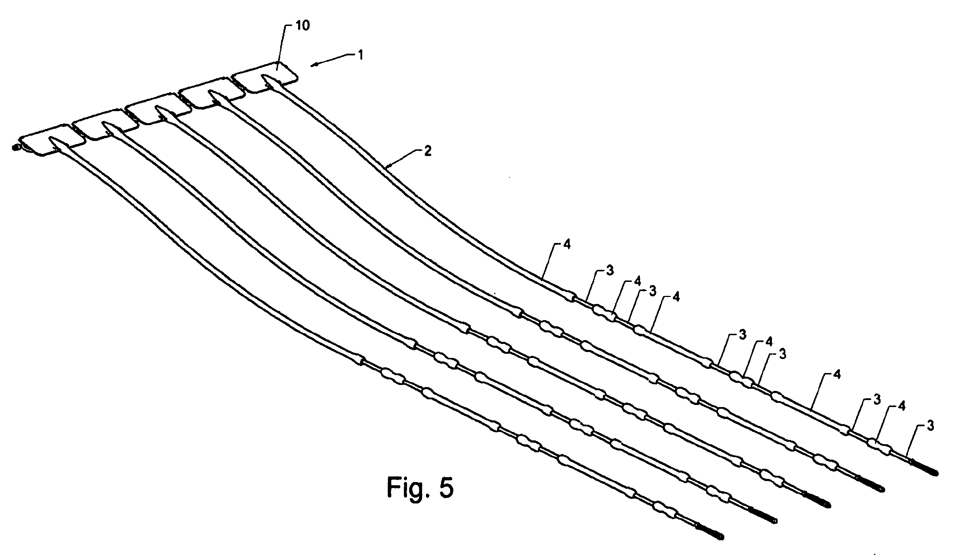

A perspective view of a multiplicity of modules is shown in fig. 5. Parts herein corresponding to parts in the preceding figures have been numbered correspondingly.

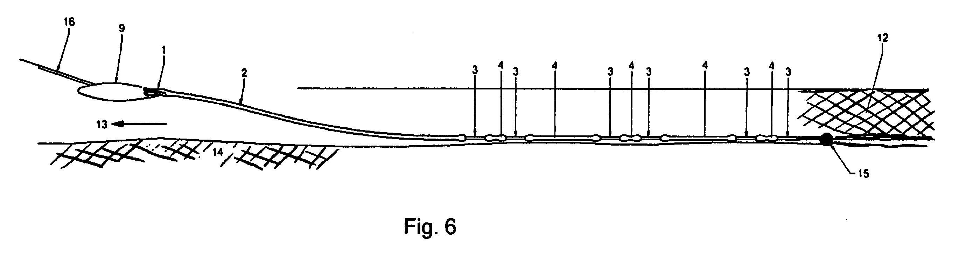

Finally fig. 6 shows a schematic side view of an application of the present invention. The modules 1 are pulled across a sea bottom 14 in the direction of the arrow 13. The modules are incorporated in a module collecting device 9 having a hydrodynamically convenient shape, as described in European patent application EP 2.043.429. The feed supply takes place from a ship (not illustrated), by means of a combination with the trawl line 16. The electrode has a position on the sea bottom, substantially near the bottom line 15 of the trawl net 12.

In the figures only the data necessary for understanding the invention have been illustrated. An expert is capable of performing further adaptations that fall within the scope of protection of the invention according to the appended claims.

## Claims

1. A device for use with electrofishing, comprising an electrode (2) which is made of an electrical conductor (3) partially covered with an insulator (4), wherein the electrical conductor (3) distributed along its length is at at least one position free of insulator (4), the device being in the form of an assembly of separate modules (1) in which each module is provided with:
- an electrical connection for providing electrical power supply to the module (1);
**characterized in that** each module is provided with:
- a single electrode (2);
- a pulse generator (6) connected to the electrical connection for powering the electrode (2) in a pulsating way; and
- at least one coupling means (5'; 5") for mutual coupling of modules (1), said coupling means (5'; 5") comprising a connection with the electrode of an adjacent module.

2. A module (1) for application in a device according to claim 1, wherein it is provided with:
- a single electrode (2);
- an electrical connection for providing electrical power supply to the module (1);
- a pulse generator (6) connected to the electrical connection for powering the electrode (2) in a pulsating way; and
- at least one coupling means (5'; 5") for mutual coupling of modules (1), said coupling means (5'; 5") capable of providing a connection with the electrode of an adjacent module.

3. A module (1) according to claim 2, wherein the module (1) comprises an enclosure (10) which comprises the pulse generator (6), the at least one coupling means (5'; 5") and the electrical connection, as well as an attachment for the electrode (2).

4. A module (1) according to claim 2 or 3, wherein the coupling means (5'; 5") is equipped for a cooperating connection with a module collecting device (9).

5. A module (1) according to one of the claims 2-4, wherein the coupling means (5'; 5") of a module (1) is equipped for cooperating connection with a coupling means (5"; resp. 5') of an adjacent module (1').

6. A module (1) according to one of the claims 2-5, wherein the module (1) comprises a fastener for a cooperating connection with a fastener of an adjacent module.

7. A module (1) according to claim 2, wherein it comprises a fastener for attachment to a module collecting device (9).

8. A module (1) according to claim 7, wherein the module collecting device (9) is selected from a flexible or a predominantly rigid device (9).

9. A module (1) according to one of the claims 7-8, wherein the module (1) has a shape adapted to the shape of the device (9).

10. A module (1) according to one of the claims 2-9, wherein the module (1) comprises a control circuit with at least one of: - a supply circuit for providing a pulse like feed to the electrode; and - a communication circuit for communication with an adjacent module, which is arranged for communicating a signal to the adjacent module after the electrode has been fed in a pulsating way.

11. A module (1) according to claim 12, wherein the module (1) comprises a communication circuit, which is arranged for at least one of: - receiving the signal of an adjacent module; - controlling the supply circuit for providing a pulse like feed to the electrode; and - having the electrode of an adjacent module act as a counter pole via a connection with that electrode.

12. A method for electrofishing using at least two modules (1) according to one of the claims 2-11, comprising the steps of: - electrically connecting the electrical connection of each module to a common electrical power supply; - mutually coupling the modules by means of the coupling means (5; 5'); and - powering the electrodes in a pulsating way at different moments in time by means of the pulse generator (6) provided in each module (1).

13. The method according to claim 12, with an electrofishing device for fishing using a trawl net (12), wherein the modules are pulled over the bottom of a water in front of the trawl net (12) and electrodes (2) of adjacent modules (1) are electrically fed in a pulsating way at different moments in time.

14. The method according to claim 12 or 13, wherein the electrodes (2) extend in the trawl direction of the electrofishing device.

## Patentansprüche

1. Einrichtung zum Elektrofischen, umfassend eine Elektrode (2), die aus einem elektrischen Leiter (3) hergestellt ist, der teilweise mit einer Isolierung (4) bedeckt ist, worin der auf deren Länge verteilte elektrische Leiter (3) mindestens einen Bereich aufweist, auf dem keine Isolierung (4) aufgebracht ist, worin die Einrichtung in Form einer Anordnung aus einzelnen Modulen (1) vorliegt, bei der jedes Modul (1) bereitgestellt ist mit:
einer elektrischen Verbindung, um dem Modul (1) eine elektrische Stromversorgung bereitzustellen,
**dadurch gekennzeichnet, dass** jedes Modul (1) bereitgestellt ist mit:
einer Einzelelektrode (2),
einem Impulsgeber (6), der mit der elektrischen Verbindung verbunden ist, um die Elektrode (2) in pulsierender Art mit Energie zu versorgen, und
mindestens einem Kupplungsmittel (5', 5") zum gegenseitigen Kuppeln von Modulen (1), worin das Kupplungsmittel (5', 5") eine Verbindung mit der Elektrode eines benachbarten Moduls umfasst.

2. Modul (1) zur Verwendung in einer Einrichtung nach Anspruch 1, worin das Modul (1) bereitgestellt ist mit:
einer Einzelelektrode (2),
einer elektrischen Verbindung, um dem Modul (1) eine elektrische Stromversorgung bereitzustellen,
einem Impulsgeber (6), der mit der elektrischen Verbindung verbunden ist, um die Elektrode (2) in pulsierender Art mit Energie zu versorgen, und
mindestens einem Kupplungsmittel (5', 5") zum gegenseitigen Kuppeln von Modulen (1), worin das Kupplungsmittel (5', 5") angepasst ist, eine Verbindung mit der Elektrode eines benachbarten Moduls bereitzustellen.

3. Modul (1) nach Anspruch 2, worin das Modul (1) eine Umhüllung (10) umfasst, die den Impulsgeber (6), das mindestens eine Kupplungsmittel (5', 5") und die elektrische Verbindung, sowie eine Befestigung für die Elektrode (2) umfasst.

4. Modul (1) nach Anspruch 2 oder 3, worin das Kupplungsmittel (5', 5") für eine zusammenwirkende Verbindung mit einer Modulaufnahmeeinrichtung (9) ausgestattet ist.

5. Modul (1) nach einem der Ansprüche 2-4, worin das Kupplungsmittel (5', 5") eines Moduls (1) für eine zusammenwirkende Verbindung mit einem Kupplungsmittel (5' bzw. 5") eines benachbarten Moduls (1') ausgestattet ist.

6. Modul (1) nach einem der Ansprüche 2-5, worin das Modul (1) ein Befestigungsmittel für eine zusammenwirkende Verbindung mit einem Befestigungsmittel eines benachbarten Moduls (1') umfasst.

7. Modul (1) nach Anspruch 2, worin das Modul (1) ein Befestigungsmittel zum Anbringen an einer Modulaufnahmeeinrichtung (9) umfasst.

8. Modul (1) nach Anspruch 7, worin die Modulaufnahmeeinrichtung (9) ausgewählt ist unter einer flexiblen oder einer überwiegend steifen Einrichtung (9).

9. Modul (1) nach einem der Ansprüche 7-8, worin das Modul (1) eine Form aufweist, die an die Form der Einrichtung (9) angepasst ist.

10. Modul (1) nach einem der Ansprüche 2-9, worin das Modul (1) eine Steuerschaltung umfasst mit mindestens einer von:
einer Versorgungsschaltung, um der Elektrode eine impulsähnliche Einspeisung bereitzustellen, und
einer Kommunikationsschaltung zum Kommunizieren mit einem benachbarten Modul, die angeordnet ist, ein Signal an das benachbarte Modul zu kommunizieren, nachdem die Elektrode impulsähnlich eingespeist wurde.

11. Modul (1) nach Anspruch 10, worin das Modul (1) eine Kommunikationsschaltung umfasst, die angeordnet ist für mindestens eines von:
empfangen des Signals eines benachbarten Moduls,
steuern der Versorgungsschaltung, um der Elektrode (2) eine impulsähnliche Einspeisung bereitzustellen, und
eine Elektrode eines benachbarten Moduls über eine Verbindung mit der Elektrode (2) dazu zu bringen, als Gegenpol zu wirken.

12. Verfahren zum Elektrofischen, bei dem mindestens zwei Module (1) nach einem der Ansprüche 2-11 verwendet werden, umfassend die Schritte:
elektrisches Verbinden der elektrischen Verbindung jedes Moduls (1) mit einer gemeinsamen elektrischen Stromquelle,
gegenseitiges Kuppeln der Module (1) mittels der Kupplungsmittel (5', 5"), und
versorgen der Elektroden (2) in pulsierender Art mit Energie zu unterschiedlichen Zeitpunkten mittels des in jedem Modul (1) bereitgestellten Impulsgebers (6).

13. Verfahren nach Anspruch 12 mit einer Elektrofischeinrichtung zum Fischen bei der Verwendung eines Schleppnetzes (12), wobei die Module (1) über den Grund eines Gewässers vor dem Schleppnetz (12) gezogen werden und wobei die Elektroden (2) von benachbarten Modulen (1) in pulsierender Art mit Energie zu unterschiedlichen Zeitpunkten versorgt werden.

14. Verfahren nach Anspruch 12 oder 13, wobei sich die Elektroden (2) in Schlepprichtung der Elektrofischeinrichtung erstrecken.

## Revendications

1. Dispositif pour la pêche à l'électricité, comprenant une électrode (2) qui est faite d'un conducteur électrique (3) partiellement recouvert d'un isolant (4), le conducteur électrique (3) réparti le long de sa longueur est en au moins une position exempt d'isolant (4), le dispositif se présentant sous la forme d'un ensemble de modules séparés (1) dans lequel chaque module comporte :
- une connexion électrique pour délivrer une alimentation en énergie électrique au module (1) ;
**caractérisé par le fait que** chaque module comporte :
- une seule électrode (2) ;
- un générateur d'impulsions (6) connecté à la connexion électrique pour alimenter en énergie l'électrode (2) de manière pulsatoire ; et
- au moins un moyen de couplage (5' ; 5") pour le couplage mutuel de modules (1), ledit moyen de couplage (5' ; 5") comprenant une connexion avec l'électrode d'un module adjacent.

2. Module (1) pour une application dans un dispositif selon la revendication 1, lequel module comporte :
- une seule électrode (2) ;
- une connexion électrique pour délivrer une alimentation en énergie électrique au module (1) ;
- un générateur d'impulsions (6) connecté à la connexion électrique pour alimenter en énergie l'électrode (2) de manière pulsatoire ; et
- au moins un moyen de couplage (5' ; 5") pour le couplage mutuel de modules (1), ledit moyen de couplage (5' ; 5") étant capable d'établir une connexion avec l'électrode d'un module adjacent.

3. Module (1) selon la revendication 2, le module (1) comprenant une enceinte (10) qui comprend le générateur d'impulsions (6), le ou les moyens de couplage (5 ; 5") et la connexion électrique, ainsi qu'une fixation pour l'électrode (2).

4. Module (1) selon la revendication 2 ou 3, dans lequel le moyen de couplage (5' ; 5") est équipé pour une connexion, à coopération, avec un dispositif de collecte de module (9).

5. Module (1) selon l'une des revendications 2 à 4, dans lequel le moyen de couplage (5' ; 5") d'un module (1) est équipé pour une connexion, à coopération, avec un moyen de couplage (5" ; respectivement 5') d'un module adjacent (1').

6. Module (1) selon l'une des revendications 2 à 5, le module (1) comprend un organe de fixation pour une connexion, à coopération, avec un organe de fixation d'un module adjacent.

7. Module (1) selon la revendication 2, comprenant un organe de fixation pour une fixation à un dispositif de collecte de module (9).

8. Module (1) selon la revendication 7, dans lequel le dispositif de collecte de module (9) est choisi parmi un dispositif (9) souple ou essentiellement rigide.

9. Module (1) selon l'une des revendications 7 et 8, le module (1) ayant une forme adaptée à la forme du dispositif (9).

10. Module (1) selon l'une des revendications 2 à 9, le module (1) comprenant un circuit de commande comportant au moins l'un de : - un circuit d'alimentation destiné à délivrer à l'électrode une alimentation de type pulsatoire ; et - un circuit de communication pour une communication avec un module adjacent, qui est agencé pour communiquer un signal au module adjacent après que l'électrode a été alimentée d'une manière pulsatoire.

11. Module (1) selon la revendication 12, le module (1) comprenant un circuit de communication, lequel est agencé pour au moins l'un de : - la réception du signal d'un module adjacent ; - la commande du circuit d'alimentation destiné à délivrer à l'électrode une alimentation de type pulsatoire ; et - le fait d'avoir l'électrode d'un module adjacent qui agit comme un contre-pôle par l'intermédiaire d'une connexion avec cette électrode.

12. Procédé pour la pêche à l'électricité à l'aide d'au moins deux modules (1) selon l'une des revendications 2 à 11, comprenant les étapes de : - connexion électrique de la connexion électrique de chaque module à une alimentation commune en énergie électrique ; - couplage mutuel des modules à l'aide du moyen de couplage (5 ; 5') ; et - alimentation en énergie des électrodes d'une manière pulsatoire à différents instants dans le temps au moyen du générateur d'impulsions (6) disposé dans chaque module (1).

13. Procédé selon la revendication 12, avec un dispositif de pêche à l'électricité pour la pêche à l'aide d'un chalut de fond (12), les modules étant tirés sur le fond d'une eau devant le chalut de fond (12) et des électrodes (2) de modules adjacents (1) étant alimentées en électricité d'une manière pulsatoire à différents instants dans le temps.

14. Procédé selon la revendication 12 ou 13, dans lequel les électrodes (2) s'étendent dans la direction de chalut du dispositif de pêche à l'électricité.
